## Europäisches Patentamt

## European Patent Office

## Office européen des brevets

(19)

(11) Numéro de publication : **0 002 141 B2**

# (12) NOUVEAU FASCICULE DE BREVET EUROPÉEN

(45) Date de publication du nouveau fascicule du brevet : **28.11.84**

(51) Int. Cl.³ : **E 02 D 27/48, E 02 D 29/00, B 65 G 1/02**

(21) Numéro de dépôt : **78400075.4**

(22) Date de dépôt : **17.08.78**

(54) **Dispositif et élément préfabriqué pour l'agencement d'un local d'entrepôt souterrain.**

(30) Priorité : **10.11.77 FR 7733887**

(43) Date de publication de la demande : **30.05.79 Bulletin 79/11**

(45) Mention de la délivrance du brevet : **12.11.80 Bulletin 80/23**

(45) Mention de la décision concernant l'opposition : **28.11.84 Bulletin 84/48**

(84) Etats contractants désignés : **BE DE GB LU NL**

(56) Documents cités :
DE-A- 1 292 827
FR-A- 2 221 016
GB-A- 1 425 955
US-A- 2 734 343
US-A- 3 642 339

(73) Titulaire : **Harnois, Georges Albert René**
**22, rue des Pâquerettes**
**F-91540 Mennecy (FR)**

(72) Inventeur : **Harnois, Georges Albert René**
**22, rue des Pâquerettes**
**F-91540 Mennecy (FR)**

(74) Mandataire : **Bonnetat, Christian et al**
**Cabinet PROPI Conseils 23 rue de Léningrad**
**F-75008 Paris (FR)**

## Description

La présente invention concerne un dispositif et des éléments préfabriqués pour l'agencement d'un local d'entrepôt souterrain, notamment pour produits alimentaires ou pharmaceutiques.

On sait que certains produits alimentaires tels que par exemple du vin, des fruits, des légumes ou des produits pharmaceutiques ou encore d'autres produits susceptibles de se dégrader sous l'action de la lumière, de la chaleur ou de grandes variations d'humidité doivent être stockés à l'abri de la chaleur et à un degré d'hygrométrie sensiblement constant.

Pour ce faire, il est donc nécessaire de disposer de locaux appropriés, tels que caves. Or, la plupart des maisons individuelles modernes construites selon des procédés industriels ou semi-industriels, de même que certains commerces, ne disposent pas actuellement de caves qui étaient traditionnellement utilisées pour entreposer ce genre de produits. Les solutions actuelles dans ce cas consistent soit à utiliser des armoires réfrigérées à l'humidité contrôlée soit, lorsqu'un jardin est attenant à la masion, à réaliser en général au fond de ce jardin une construction de type cellier souvent en partie enterré.

La première de ces solutions nécessite un coût d'installation élevé et est en outre relativement onéreuse à l'entretien, compte tenu de la consommation d'énergie nécessaire. En outre, le volume de stockage est relativement réduit. La seconde de ces solutions nécessite également un investissement relativement important pour sa construction et, outre son aspect souvent très inesthétique dans le jardin, présente l'inconvénient, par suite de l'exposition au moins partielle au soleil et aux intempéries, de ne pas conserver les produits entreposés dans les conditions de température et d'humidité souhaitables.

Par ailleurs, par le brevet britannique n° 1 425 955, il est connu de réaliser avec une construction extérieure, une construction ou structure enfouie dans le sol, dont les parois forment l'enveloppe d'un volume dont l'accès est rendu possible par un dispositif porte-escalier. L'enveloppe est réalisée par des éléments préfabriqués assemblés donnant au volume toutes formes et dimensions requises.

La présente invention se propose de permettre l'agencement de locaux pour le stockage de produits à l'abri de la chaleur, tels que produits alimentaires ou pharmaceutiques, d'une façon simple, avec des frais d'installation faibles, et ne nécessitant pratiquement aucun frais pour l'entretien après l'installation, dans des constructions non prévues avec de tels locaux.

A cette fin, selon l'invention, le dispositif pour l'agencement d'un local d'entrepôt souterrain comprenant une enveloppe constituée d'éléments préfabriqués superposés et/ou juxtaposés, délimitant ledit local d'entrepôt est caractérisé en ce que ces éléments, disposés dans un puits creusé dans le sol à travers une ouverture découpée dans une assise en forme de dalle d'une construction extérieure, sont constitués par des casiers alvéolaires disposés en rangées empilées sur au moins une partie de la hauteur du puits, les casiers comportant une ouverture orientée vers l'intérieur du puits et une face opposée tournée vers l'extérieur du puits.

Avantageusement, le dispositif selon l'invention comporte d'autres éléments préfabriqués formant un organe d'accès à tous les casiers, disposé au centre de l'enveloppe.

Cet organe d'accès aux casiers alvéolaires est de préférence un escalier en colimaçon dont le noyau central vertical est disposé selon l'axe vertical du puits.

Dans le mode de réalisation dans lequel le puits présente une forme cylindrique notamment de section circulaire, les rangées de casiers forment une enveloppe cylindrique.

Les éléments formant l'organe d'accès peuvent être distincts ou au contraire solidaires d'éléments formant casiers.

Dans un mode avantageux de réalisation, chaque élément formant l'organe d'accès comporte une partie périphérique en forme de portion de couronne annulaire venant s'intercaler entre deux éléments formant casiers, disposés dans la même rangée.

Les éléments préfabriqués peuvent être réalisés en tous matériaux appropriés notamment en béton hydrofuge ou en matière plastique. Ces éléments peuvent être avantageusement modulaires et réalisés par moulage permettant une fabrication en grande série qui réduit encore le coût de l'installation de l'ensemble du dispositif.

Les figures du dessin annexé feront bien comprendre comment l'invention peut être réalisée.

La figure 1 est une vue en perspective, partiellement arrachée, d'un dispositif selon l'invention mis en place dans le sol d'un bâtiment.

La figure 2 est une vue de dessus du dispositif selon la figure 1.

La figure 3 est une vue de dessus du dispositif de la figure 1 dans une variante de réalisation.

La figure 4 montre une variante d'agencement de casiers alvéolaires du dispositif selon l'invention.

La figure 5 illustre en perspective et côte à côte un élément de marche et un élément de casier.

Les figures 6, 7 et 8 illustrent schématiquement, en vue de dessus, trois implantations possibles du dispositif selon l'invention.

Pour réaliser, selon l'invention, un local d'entrepôt dans une construction (non représentée) reposant sur le sol 1 par une dalle d'assise 2, on commence par découper dans celle-ci une ouverture 3, de préférence circulaire.

Puis, à travers l'ouverture 3, on creuse dans le sol 1 un puits 4, par exemple cylindrique. Un tel puits peut présenter, dans le cas d'une maison individuelle, une profondeur de 2,80 m et un diamètre de 1,80 m.

Les parois du puits 4 sont revêtus d'un dispositif d'étanchéité 5, par exemple sous forme d'une feuille de matière synthétique, telle que le butyl.

Ensuite, à l'intérieur du puits 4 et en son centre, on dispose un escalier en colimaçon, par exemple en éléments préfabriqués de béton, dont le noyau central 6 se trouve disposé axialement verticalement au centre du puits et dont les marches 7 s'étendent depuis le fond du puits jusqu'à son ouverture supérieure.

On empile alors sur une partie de la hauteur du puits à partir de son fond, ou de préférence sur toute la hauteur de celui-ci, et selon une partie de son périmètre, ou de préférence la totalité de celui-ci, une pluralité de rangées horizontales de casiers alvéolaires à ayant chacun par exemple une profondeur d'environ 25 cm.

Ces casiers 8 avantageusement réalisés en béton hydrofuge moulé sont mis en place dans le puits à la manière de parpaings et tapissent ainsi la surface de la paroi dudit puits réalisant un grand nombre d'espaces de rangement séparés pouvant recevoir divers produits à entreposer, tels qu'en particulier des bouteilles, des fruits et légumes ou des produits pharmaceutiques. Il est possible de définir en fonction de la profondeur dans le puits différentes zones de rangement convenant chacune à un type de produit.

Les casiers dans le mode de réalisation représenté sont disposés selon un cylindre annulaire dont la paroi externe correspond à la paroi du puits et la paroi interne comporte une pluralité d'alvéoles présentant une face avant d'accès.

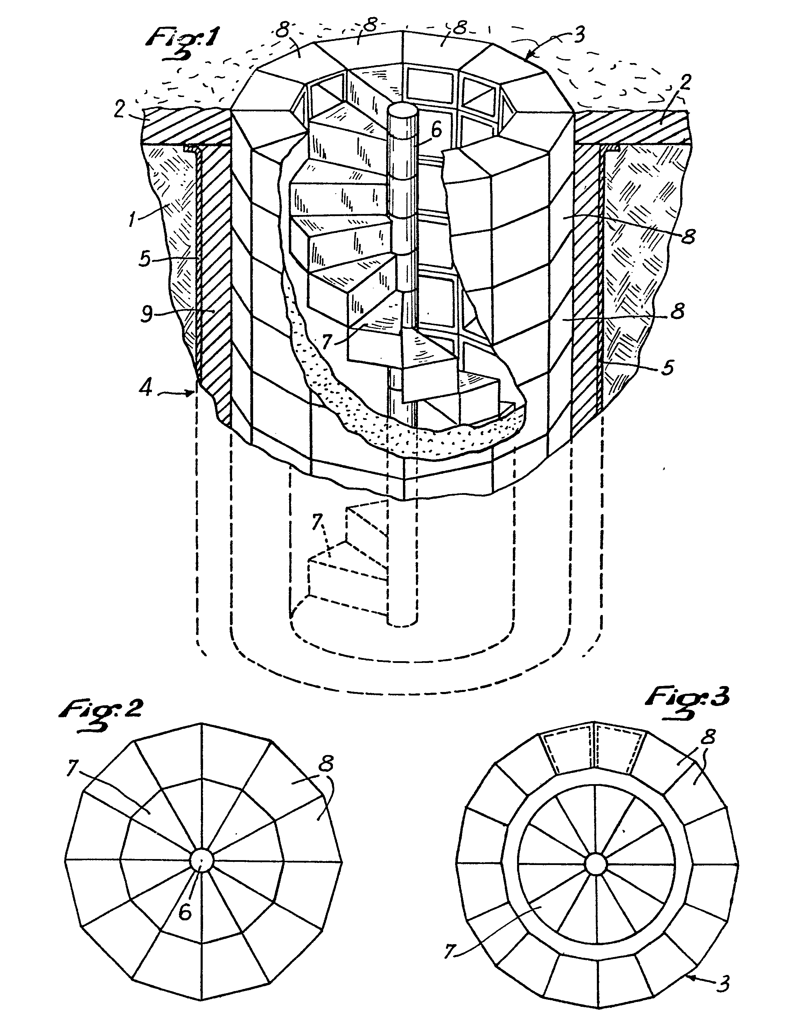

Les casiers sont directement juxtaposés comme dans les exemples représentés Fig. 1 à 4.

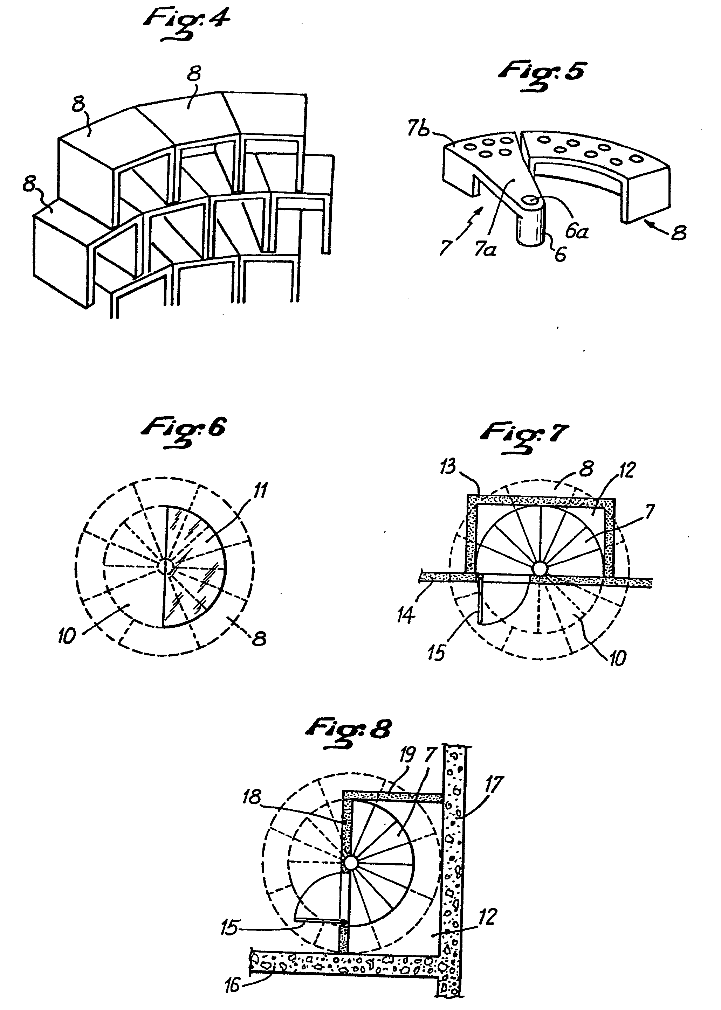

De plus, les casiers peuvent être disposés en rangées alignées verticalement comme dans l'exemple de la figure 1 ou disposés en quinconce comme dans l'exemple de la figure 4.

Comme illustré sur la figure 3, les éléments 8 formant les casiers peuvent être séparés des éléments 7 formant l'escalier. En revanche, comme illustré par la figure 2, chaque marche 7 de l'escalier peut faire partie intégrante d'un ou de plusieurs éléments de casiers 8.

Dans l'exemple de la figure 4, on a représenté les casiers sans paroi de fond inférieure, chacun des casiers reposant sur les faces supérieures de deux casiers de la rangée inférieure. Une telle réalisation sans face de fond de chacun des casiers permet d'une part de réaliser une économie de matière lors de la fabrication par moulage des casiers et d'autre part de faciliter l'opération de démoulage des casiers lors de leur fabrication.

Dans le mode de réalisation des éléments préfabriqués 7 et 8 illustré par la figure 5 et destiné à un puits cylindrique, l'élément 7 comporte une partie 7a formant la marche proprement dite et une partie 7b périphérique en forme de portion de couronne annulaire. L'élément 8 présente lui-même la forme d'une portion de couronne annulaire, de sorte qu'à chaque niveau horizontal d'éléments, la couronne annulaire formée par ceux-ci comporte plusieurs éléments 8 et une partie 7b. Bien entendu, d'un niveau horizontal d'éléments au suivant, la partie 7b d'un élément 7 est décalée angulairement autour de l'axe du puits, de façon que les parties 7a puissent former un escalier en colimaçon continu.

Le noyau central 6 des éléments 7 peut être percé d'un trou 6a, orthogonal à la marche 7a, pouvant servir au montage dudit escalier, et former par superposition un passage de ventilation basse dans le dispositif.

Comme illustré sur les figures 1 à 5, les faces avant et arrière des éléments 8 peuvent être planes ou courbes.

Entre le dispositif d'étanchéité et les casiers 8, il est avantageux de disposer un stabilisateur 9, par exemple du sable.

L'ouverture du dispositif selon l'invention peut être obturée par une trappe amovible. Cependant, il est avantageux qu'au moins la moitié de cette ouverture soit obturée de façon définitive, seul l'accès aux premières marches étant dégagé. Par exemple, sur la figure 6, on a illustré en vue de dessus un dispositif selon l'invention, de forme cylindrique, dont l'ouverture circulaire dans la dalle 2 est obturée de façon définitive par une demi-lune 10 faisant partie de ladite dalle et par une trappe 11 amovible et demi-circulaire, complétant la demi-lune 10.

Plutôt que d'obturer cet accès par une trappe, il peut être préférable de prévoir à l'aide de cloisons s'appuyant sur la dalle d'assise un réduit ou cabinet, dans le plancher duquel est ménagé ledit accès. Par exemple, dans l'exemple schématique de la figure 7, l'ouverture du dispositif selon l'invention est obturée pour moitié par une demi-lune 10, comme dans l'exemple de la figure 6, l'autre moitié de cette ouverture, correspondant aux premières marches, débouchant dans un réduit 12, délimité par des cloisons 13 et 14 et obturable par une porte 15. Les cloisons 13 et 14 peuvent être construites spécialement pour former le réduit 12. Dans le cas représenté sur la figure 8, le réduit 12 a été formé en utilisant deux murs préexistants 16 et 17 en angle, complété par deux cloisons en angle 18 et 19.

## Revendications

1. Dispositif pour l'agencement d'un local d'entrepôt souterrain comprenant une enveloppe constituée d'éléments préfabriqués (8) superposés et/ou juxtaposés, délimitant ledit local d'entrepôt, caractérisé en ce que ces éléments (8), disposés dans un puits (4) creusé dans le sol (1) à travers une ouverture (3) découpée dans une assise en forme de dalle (2) d'une construction extérieure, sont constitués par des casiers alvéolaires disposés en rangées empilées sur au moins une partie de la hauteur du puits (4), les casiers comportant une ouverture orientée vers l'intérieur du puits et une face opposée tournée vers l'extérieur du puits.

2. Dispositif selon la revendication 1, caractérisé en ce qu'il comporte d'autres éléments préfabriqués (7) formant un organe d'accès à tous les casiers, disposé au centre de l'enveloppe.

3. Dispositif selon la revendication 2, caractérisé en ce que ledit organe d'accès aux casiers est un escalier en colimaçon dont le noyau central vertical est disposé selon l'axe vertical du puits (4).

4. Dispositif selon la revendication 1, dans lequel le puits (4) présente une forme cylindrique, notamment de section circulaire, caractérisé en ce que les rangées de casiers (8) forment une enveloppe cylindrique.

5. Dispositif selon la revendication 2 ou 3, caractérisé en ce que les éléments (7) formant l'organe d'accès sont distincts des éléments (8) formant casiers.

6. Dispositif selon la revendication 2 ou 3, caractérisé en ce que chaque élément (7) formant l'organe d'accès est solidaire d'au moins un élément (8) formant casier.

7. Dispositif selon la revendication 2 ou 3, caractérisé en ce que chaque élément (7) formant l'organe d'accès comporte une partie périphérique (7b) en forme de portion de couronne annulaire venant s'intercaler entre deux éléments (8) formant casier, disposés dans la même rangée.

8. Elément préfabriqué pour la réalisation d'un local d'entrepôt souterrain, destiné à former, par assemblage à d'autres, l'enveloppe spécifiée sous la revendication 4, du type constitué d'un casier de forme alvéolaire présentant une ouverture et une face opposée à cette ouverture, caractérisé en ce que ledit casier est prévu avec une forme géométrique telle que lesdits casiers étant directement juxtaposés sont disposés selon un cylindre annulaire dont la paroi externe correspond à la paroi du puits, et la paroi interne comporte une pluralité d'alvéoles présentant une face avant d'accès.

9. Elément préfabriqué selon la revendication 8 ci-dessus, caractérisé en qu'il présente la forme d'une portion de couronne annulaire.

10. Elément préfabriqué pour la réalisation d'un local d'entrepôt souterrain, caractérisé en ce qu'il est destiné à former, par assemblage à d'autres, l'enveloppe spécifiée sous la revendication 1, et l'organe d'accès spécifié sous la revendication 6.

## Claims

1. Device for arranging an underground storage area comprising an envelope constituted by superposed and/or juxtaposed prefabricated elements (8) defining said storage area, characterised in that these elements (8), disposed in a well (4) bored in the ground (1) through an opening (3) cut in a flooring in the form of a flagstone (2) of an outside construction, are constituted by cellular bins disposed in rows stacked over at least a part of the height of the well (4), the bins comprising an opening oriented inwardly with respect to the well and an opposite face oriented outwardly with respect to said well.

2. Device according to Claim 1, characterised in that it comprises other prefabricated elements (7) forming a member giving access to all the bins, disposed at the centre of the envelope.

3. Device according to Claim 2, characterised in that said member giving access to the bins is a spiral staircase whose central vertical newel is disposed along the vertical axis of the well (4).

4. Device according to Claim 1, in which the well (4) is cylindrical in form, particularly of circular section, characterised in that the rows of bins (8) form a cylindrical envelope.

5. Device according to Claim 2 or 3, characterised in that the elements (7) forming the member giving access are distinct from the elements (8) forming bins.

6. Device according to Claim 2 or 3, characterised in that each element (7) forming access member is fast with at least one element (8) forming bin.

7. Device according to Claim 2 or 3, characterised in that each element (7) forming the access member comprises a peripheral portion (7b) in the form of a portion of annular ring interposed between two elements (8) forming bin, disposed in the same row.

8. Prefabricated element for arranging an underground storage area, adapted to form, by assembly with others, the envelope according to Claim 4, of the type constituted by a cellular bin comprising an opening and a face opposite this opening, characterized in that said bin is of such geometrical form that when such bins are directly juxtaposed, they are arranged as an annular cylinder of which the outer wall corresponds to the wall of the well, and whose inner wall comprises a plurality of cells presenting a front face for access.

9. Prefabricated element according to Claim 8, characterized in that it takes the shape of a portion of annular ring.

10. Prefabricated element for arranging an underground storage area, characterized in that it is intended to form, by assembly with others, the envelope according to Claim 4 and the element for access according to Claim 6.

## Ansprüche

1. Vorrichtung zur Einrichtung eines unterirdischen Lagerraumes, mit einem aus übereinander- bzw. nebeneinanderliegenden vorgefertigten Bauteilen (8) bestehenden Mantel, der diesen Lagerraum begrenzt, dadurch gekennzeichnet, dass diese in einem durch eine in eine plattenförmige Tragschicht (2) einer Aussenkonstruktion eingebrachte Öffnung (3) in den Boden (1) gehöhlten Schacht (4) angeordneten Bauteile (8) aus zellenförmigen Kastenfächern bestehen, die in über mindestens einen Teil der Höhe des Schachts (4) aufeinandergesetzten Reihen angeordnet sind, wobei die Kastenfächer eine in das Schachtinnere orientierte Öffnung und eine gegenüberliegende zu dem Schachtäusseren gewendete Seite aufweisen.

2. Vorrichtung nach Anspruch 1, dadurch gekennzeichnet, dass sie aus weiteren vorgefertigten Bauteilen (7) besteht, welche ein in der Mitte des Mantels angeordnetes Zugangselement zu allen Kastenfächern bilden.

3. Vorrichtung nach Anspruch 2, dadurch gekennzeichnet, dass dieses Zugangselement zu den Kastenfächern eine Wendeltreppe darstellt, deren zentrale vertikale Treppenspindel gemäss der vertikalen Achse des Schachts (4) angeordnet ist.

4. Vorrichtung nach Anspruch 1, in welcher der Schacht (4) eine zylindrische Form aufweist, besonders einen runden Querschnitt, dadurch gekennzeichnet, dass die Reihen der Kastenfächer (8) einen zylindrischer Mantel bilden.

5. Vorrichtung nach Anspruch 2 oder 3, dadurch gekennzeichnet, dass die das Zugangselement bildenden Bauteile (7) von den die Kastenfächer bildenden Bauteile (8) verschieden sind.

6. Vorrichtung nach Anspruch 2 oder 3, dadurch gekennzeichnet, dass jedes das Zugangselement bildende Bauteil (7) mit mindestens einem Kastenfach bildenden Bauteil (8) eine Bauheit bildet.

7. Vorrichtung nach Anspruch 2 oder 3, dadurch gekennzeichnet, dass jedes das Zugangselement bildende Bauteil (7) ein kreisringstückförmiges Umfangsteil (7b) aufweist, welches zwischen zwei in derselben Reihe angeordnete Bauteile gesetzt wird.

8. Vorgefertigtes Bauteil für die Herstellung eines unterirdischen Lagerraums, mit dem in Zusammensetzung mit anderen Bauteilen der zylindrische Mantel von Anspruch 4 der Art gebildet werden kann, daß es ein zellenförmiges Kastenfach mit einer Öffnung und einer dieser Öffnung gegenüberliegenden Seite darstellt, dadurch gekennzeichnet daß der Kasten derart geometrisch gestaltet ist, daß, wenn die Kastenfächer unmittelbar nebeneinandergelegt werden, sie als ringförmiger Zylinder angeordnet sind, wobei dessen Aussenwand der Wand des Schachtes entspricht und dessen Innenwand mehrere Zellen aufweist, die eine Stirnseite für den Zugang bietet.

9. Vorgefertigtes Bauteil nach Anspruch 8, dadurch gekennzeichnet, daß es in Form eines Ringwulstabschnittes ausgebildet ist.

10. Vorgefertigtes Bauteil für die Herstellung eines unterirdischen Lagerraums, dadurch gekennzeichnet, daß es dazu bestimmt ist, durch Zusammensetzen mit anderen Bauteilen den Mantel nach Anspruch 4 und das Zugangselement nach Anspruch 6 zu bilden.

Fig:1

Fig:2

Fig:3

Fig. 4

Fig. 5

Fig. 6

Fig. 7

Fig. 8